Europäisches Patentamt

European Patent Office

Office européen des brevets

(19)

(11) Publication number: **0 477 905 A2**

## EUROPEAN PATENT APPLICATION

(12)

(21) Application number: **91116341.8**

(22) Date of filing: **25.09.91**

(51) Int. Cl.5: **H04N 9/81**

(30) Priority: **26.09.90 JP 254145/90**

(43) Date of publication of application:
**01.04.92 Bulletin 92/14**

(84) Designated Contracting States:
**DE FR**

(71) Applicant: **HITACHI, LTD.**
**6, Kanda Surugadai 4-chome**
**Chiyoda-ku, Tokyo 101(JP)**

(72) Inventor: **Otsubo, Tadasu**
**Hitachi Chigasaki Domitori 218**
**1-9, Honjukucho, Chigasaki-shi(JP)**
Inventor: **Furuhata, Takashi**
**1330-114, Koshigoe**
**Kanakura-shi(JP)**
Inventor: **Takahashi, Hiroaki, Raionzu**
**Manshon**
**Totsuka Dai 3-608, 1080-13, Gumizawacho**
**Totsuka-ku, Yokohama-shi(JP)**
Inventor: **Hamaguchi, Masakazu**
**Hachimanyama Apato 241, 1545, Yoshidacho**
**Totsuka-ku, Yokohama-shi(JP)**
Inventor: **Naka, Kazutaka**
**Matsuba Haitsu B-103, 643-1, Nakatacho**
**Izumi-ku, Yokohama-shi(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) **Video signal recording/reproducing system and method.**

(57) A video signal recording system and method for recording a video signal including a luminance signal (Y), a first color signal ($P_B$) and a second color signal ($P_R$) in a plurality of mutually obliquely parallel tracks on a magnetic tape (30). In the system and method, at least two heads (28, 29, 28a, 28b, 29a, 29b) having different azimuth angles forms the plurality of tracks. The luminance signal (Y) and the first color signal ($P_B$) are processed and then applied to one (28, 28a, 28b) of at least the two heads (28, 29, 28a, 28b, 29a, 29b) having a predetermined azimuth angle to record a signal based on the luminance signal (Y) and the first color signal ($P_B$) in the tracks formed by the head (28, 28a, 28b) having the predetermined azimuth angle. The luminance signal (Y) and the second color signal ($P_R$) are processed and then applied to the other (29, 29a, 29b) of at least the two heads (28, 29, 28a, 28b, 29a, 29b) having another azimuth angle different from the predetermined azimuth angles to record a signal based on the luminance signal (Y) and the second color signal ($P_R$) in the tracks formed by the other head (29, 29a, 29b) having the other predetermined azimuth angle.

F I G. I

## BACKGROUND OF THE INVENTION

The present invention generally relates to a magnetic recording/reproducing system of a rotary head helical scan type in which one field of luminance signal and two color signals are segment- or channel-divided for their recording, and a magnetic recording/reproducing method.

As one of methods for realizing recording of a wide band over that of the existing non-segment recording method with use of a magnetic recording/reproducing system of a rotary head helical scan type, there is a segment recording method or a channel divided recording method for increasing the rotarty speed of a rotary head to distribute one field of video signal into a plurality of video tracks on magnetic tape for its recording therein.

In the above segment recording method or channel divided recording method, when it is desired to run the magnetic tape run at a speed different from that of the magnetic tape running in a recording mode to reproduce the video signal, that is, in a variable speed reproduction mode (so-called special reproduction mode), the rotary head is scanned across video tracks, so that the corresponding segment signals are reproduced in disorder. For the purpose of preventing any disturbance in a reproduced image in the special reproduction mode, there has been proposed such a prior system that, in a recording mode, a video signal is recorded on magnetic tape with a segment identification signal inserted in the video track of each segment at a predetermined position following a head switching point thereof to identify what numbered segment from the top in a frame; whereas, in a reproduction mode, the aforementioned segment identification signal is detected to identify the segment of a video signal reproduced at every head switching and to thereby provide a stable reproduced image, as disclosed in JP-A-63-61577.

## SUMMARY OF THE INVENTION

In a magnetic recording system for recording a luminance signal (Y) and a color signal (C) on a time division multiplex basis, two sorts of color signals (for example, two color difference signals $P_B$ and $P_R$) are subjected to a line sequential operation, that is, these color signals are converted into a single color signal by thinning out alternately for every horizontal scanning period, and the converted color signal, together with the luminance signal, is subjected to a time division multiplexing operation for every horizontal scanning period and then recorded.

In such a magnetic recording system for recording the color signals subjected to the time division multiplexing operation as mentioned above, the color difference signals are recorded as dispersed into the respective tracks. For this reason, in a normal reproduction mode (wherein the magnetic tape is run at the same speed as the running speed of the magnetic tape run in a recording mode to reproduce a video signal, when the recorded segment can be identified, the color signal can be identified. In a variable speed reproduction mode, however, since the head is scanned across the recording tracks, the respective segment signals obtained from the respective segments through the head are reproduced and output in disorder. Therefore, it is impossible to distinguish between the color difference signals unless the reproduced signals corresponding to the signals recorded in the segments are discriminated from each other on the basis of the reproduced signals.

In the above prior art system, the discrimination between the color signals recorded in the segment tracks is carried out by detecting the segment identification signals recorded in the respective video tracks to distinguish what numbered segments. However, in the prior art, since the segment identification signal is recorded in the video track only at a predetermined position therein, it is not guaranteed that the reproducing head can positively scan, in the special reproduction mode, the predetermined position where the segment identification signal is recorded. In addition, the prior art system has a problem that, in the case where the reproducing head fails to scan the predetermined position, even when the head is scanned across the video track to switch to another segment, this scanning operation is processed as the same segment during one scanning period, so that it cannot be distinguished whether the reproduced color signal is the signal $P_B$ or $P_R$, which results in that a hue error takes place in the reproduced signal.

It is therefore an object of the present invention to provide a recording/reproducing system which, when recording/reproducing component signals indicative of luminance and color data on a segment recording/reproducing basis or on a channel divided recording/reproducing basis, can realize reliable and simple discrimination between color signals not only in a usual or normal reproduction mode but also in a variable speed reproduction mode.

In accordance with an aspect of the present invention, there is provided a video signal recording system and method for recording a video signal including a luminance signal, a first color signal and a second color signal in a plurality of mutually obliquely parallel tracks on a magnetic tape. In the present invention, a plurality of tracks are formed by means of at least two heads having different azimuth angles, said luminance signal and the first color signal are processed and its processed signals are applied to one of the at least two heads having one of the predetermined azimuth angles to record a signal based on the luminance signal and the first color signal in the tracks formed by one head having one predetermined azimuth angle, and the luminance signal and the second color signal are processed and its processed signals are applied to the other of the at least two heads having the other of the predetermined azimuth angles to record a signal based on the luminance signal and the second color signal in the tracks formed by the other head having the other predetermined azimuth angle.

The signals recorded with the different azimuth angles in the recording mode are reproduced in the reproduction mode through the scanning operation of the heads having the same azimuth angles as in the recording mode, so that the separation between a reproduced signal from a track in which the video signal including the first color signal and a reproduced signal from a track in which the video signal including the second color signal can be automatically realized from the output of the reproducing heads regardless of the reproducing-head scanning pattern in normal and variable-speed reproduction modes. Therefore, an error between the first and second color signals caused by the reproduced-signal processing can be prevented.

BRIEF DESCRIPTION OF THE DRAWINGS

Fig. 1 is a block diagram of a first embodiment of the present invention;
Figs. 2A to 2E show diagrams for explaining a recorded signal in the first embodiment;
Fig. 3 shows a recorded track pattern in the first embodiment;
Fig. 4 is a waveform a segment synchronizing signal;
Fig. 5A shows a recorded track pattern in a special reproduction mode;
Figs. 5B and 5C are diagrams showing reproduced signals in the special reproduction mode respectively;
Fig. 6 shows a vertical filter;
Fig. 7 shows a timebase processing circuit;
Fig. 8 shows a color signal interpolation circuit;
Fig. 9 is a block diagram of a second embodiment of the present invention;
Fig. 10 shows a recorded track pattern in the second embodiment of the present invention;
Fig. 11 is a block diagram of a third embodiment of the present invention;
Figs. 12A to 12J are diagrams for explaining the processing of a recorded signal;
Figs. 13A to 13D are diagrams showing a recorded signal; and
Fig. 14 shows an add-subtract line-sequential circuit.

DESCRIPTION OF THE PREFERRED EMBODIMENTS

Embodiments of the present invention will be detailed with reference to the accompanying drawings.

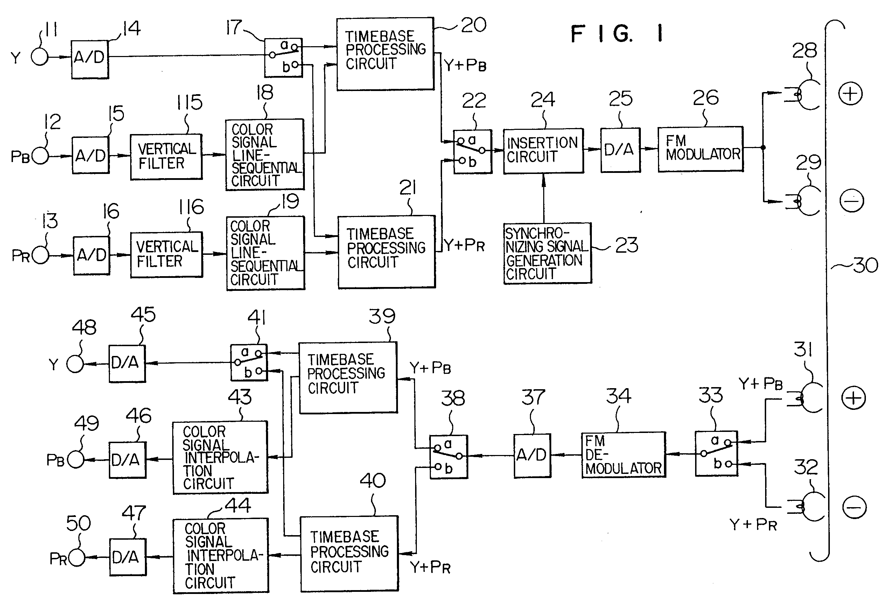

Referring first to Fig. 1, there is shown a block diagram of an embodiment of the present invention for explaining how to process signals, in which reference symbol Y denotes a luminance signal and $P_B$ and $P_R$ denote color difference signals.

A circuit shown in Fig. 1 includes input terminals 11, 12 and 13 through which the signals Y, $P_B$ and $P_R$ are input to the circuit respectively, A/D converters 14, 15 and 16, vertical filters 115 and 116, a switch 17, color signal line-sequential circuits 18 and 19, timebase processing circuits 20 and 21, a switch 22, a synchronizing signal generation circuit 23, an insertion circuit 24, a D/A converter 25, an FM modulator 26, recording heads 28 and 29 having different + and - azimuth angles respectively, a magnetic tape 30, and recording heads 31 and 32 respectively having different + and - azimuth angles which are the same as those of the recording heads 28 and 29. The circuit of Fig. 1 also includes an FM demodulator 34, an A/D converter 37, switches 33 and 38, timebase processing circuits 39 and 40, a switch 41, color signal interpolation circuits 43 and 44, D/A converters 45, 46 and 47, and output terminals 48, 49 and 50 through which the signals Y, $P_B$ and $P_R$ are output from the circuit.

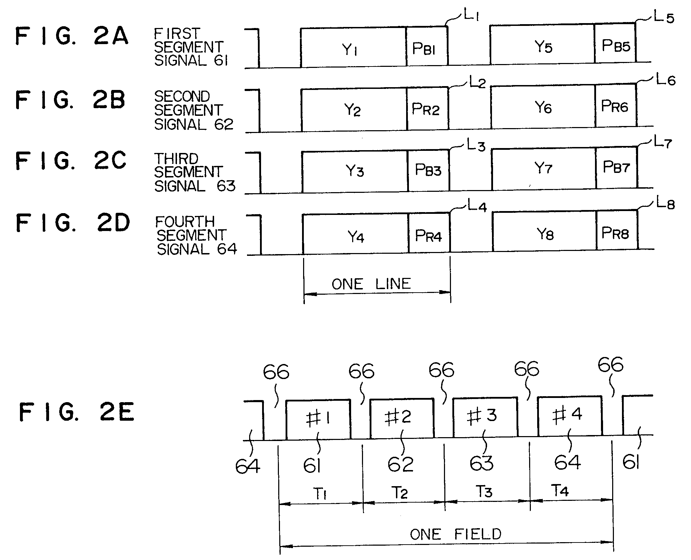

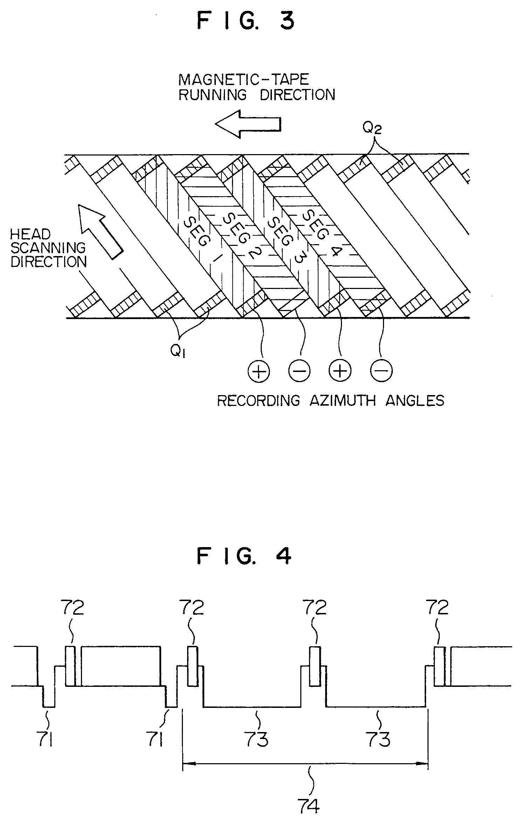

Shown in Figs. 2A to 2E are recorded signal in the embodiment of Fig. 1. The present embodiment will be explained in connection with the case where the two rotary heads 28 and 29 (or 31 and 32) are mounted to a head drum (not shown) as spaced from each other by an angle of 180 degrees, the magnetic tape 30 is wound around the head drum as contacted therewith along its circumferential angle somewhat larger than 180 degrees so that the two rotary heads are simultaneously brought into contact with the magnetic tape, i.e., form a so-called overlap region to record a video signal. More specifically, explanation will be made as to the operation of the embodiment when the rotary heads are rotated at a speed (7200 rpm) corresponding to 4 times their normal speed and one field of video signal is divided into 4 segments to record the video signal. In Fig. 2, reference numerals 61, 62, 63 and 64 denote time-division multiplexed signals for first, second, third and fourth segments respectively. Numeral 65 denotes an output signal of the switch 22, 66 a segment blanking duration. Further, reference symbols $Y_K$, $P_{BK}$ and $P_{RK}$ (K = 1, 2, 3, ...) indicate the k-th line signals of the signals Y, $P_B$ and $P_R$ respectively. In addition, symbol $L_K$ represents a time-division multiplexed signal for the K-th line, and symbol $T_j$ (j = 1, 2, 3 or 4) represents the j-th segment duration. A recorded pattern on the magnetic tape 30 in the present embodiment is shown in Fig. 3. Fig. 4 shows a waveform of a segment synchronizing signal.

Explanation will next be made as to the operation of the circuit of the embodiment of Fig. 1. The luminance signal Y and the two color difference signals $P_B$ and $P_R$ are input to the circuit of Fig. 1 from the input terminals 11, 12 and 13 respectively. The three signals, which are all baseband analog signals, are converted into digital signals at the A/D converters 14, 15 and 16 respectively.

The color signals $P_B$ and $P_R$ converted as digital signals are applied to the vertical filters 115 and 116 where the digital signals are subjected to a vertical filtering operation such as an adding operation with respect to adjacent lines therein respectively. For example, the vertical filter 115 weights one of the line signals of the signal $P_B$ and its adjacent line signals at both sides of the first line signal by multiplying respectively suitable coefficients to these line signals and then adds them together to obtain a line signal which corresponds to the signal $P_B$ after subjected to the vertical filtering operation. The same explanation holds true for the vertical filter 116. That is, in the similar way, the vertical filter 116 outputs the signal $P_R$ after subjected to the vertical filtering operation.

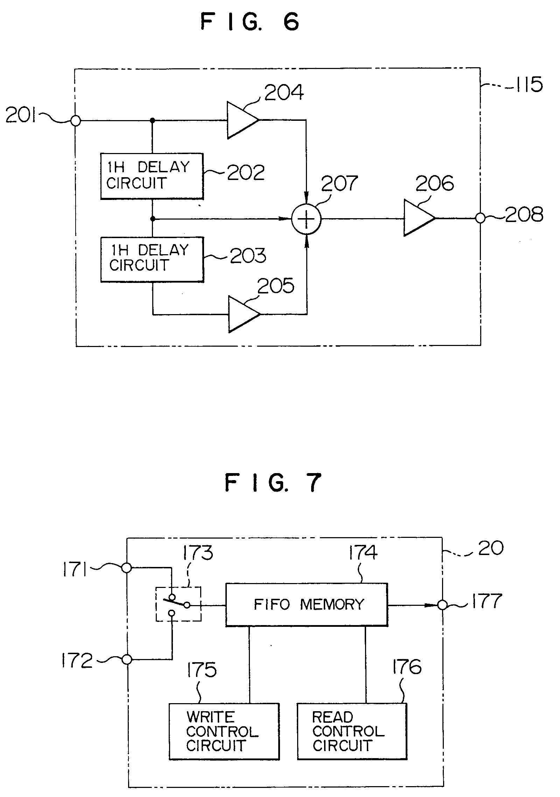

An example of the configuration of the vertical filter 115 for performing such operation as mentioned above is shown in Fig. 6. In the drawing, the vertical filter 115 comprises an input terminal 201 through which the color signal $P_B$ converted as a digital signal is input, delay circuits 202 and 203 for providing one horizontal scanning interval (1H) respectively, coefficient appliers 204 to 206 having a coefficient of 1/2 respectively, an adder 207, and an output terminal 207. The vertical filter 116 may have substantially the same configuration as the vertical filter 115.

The signals $P_B$ and $P_R$ subjected to the vertical filtering operation are then sent to the color signal line-sequential circuits 18 and 19 respectively. The line sequential circuit 18 outputs only odd-numbered lines from the input signal $P_B$, while the line sequential circuit 19 outputs only even-numbered lines from the input signal $P_R$, whereby each of the color signals is reduced to 1/2 with respect to the number of their recording lines. More specifically, the circuits 18 and 19 may comprise respectively a switch circuit which is operated based on such a signal synchronized with the signals $P_R$ and $P_B$ as, for example, a horizontal synchronizing signal.

Meanwhile, the switch 17 is used, on the basis of a horizontal synchronizing signal derived from the signals Y, $P_B$ and $P_R$ of the input terminals 11, 12 and 13 or on the basis of a horizontal synchronizing signal which is separately input externally and is synchronized with the signals Y, $P_B$ and $P_R$, to switch the signal Y on every line basis to send odd-numbered and even-numbered lines in the signal Y alternately to terminals 'a' and 'b' respectively.

The timebase processing circuit 20, which comprises, for example, a random access memory, receives signals $Y_{(2i-1)}$ (i = 1, 2, ...) indicative of the odd-numbered lines issued from the terminal 'a' of the switch 17 as well as a signal $P_{B(2i-1)}$ indicative of the odd-numbered lines issued from the color signal line-sequential circuit 18, performs its time-division multiplexing operation over the received signals $Y_{(2i-1)}$ and $P_{B(2i-1)}$ for each identical line to generate a time division multiplex signal $L_{(2i-1)}$. In the timebase processing circuit 20, further, the output sequence of lines of the time division multiplex signal $L_{(2i-1)}$ are controlled so that the signal $L_{(2i-1)}$ is divided into a first segment signal represented by (61) in Fig. 2A and output from the circuit 20 in the order of $L_1$, $L_5$, $L_9$, ... during a first segment duration $T_1$ corresponding to the first about 1/4 of one field of a signal represented by (65) in Fig. 2E as well as a third segment signal represented by (63) in Fig. 2C and output from the circuit 20 in the order of $L_3$, $L_7$, $L_{11}$, ... during a third segment duration $T_3$ corresponding to the third about 1/4 of one field of the signal represented by (65) in Fig. 2E.

Fig. 7 shows an exemplary arrangement of the timebase processing circuit 20 for performing such operation as mentioned above. The circuit 20 of Fig. 7 comprises an input terminal 171 connected to the terminal 'a' of the switch 17, an input terminal 172 connected to an output of the color signal line-sequential circuit 18, a switch circuit 173 for switching of signals received from the two input terminals 171 and 172, a first-in first-out (FIFO) memory 174, a write control circuit 175, a read control circuit 176, and an output terminal 177 from which an output signal processed in the circuit 20 is output. More specifically, the FIFO memory outputs data in the data input order with a delay determined by the write and read control signals externally applied, and has a memory capacity ranging from about one line of the video signal to one field or one frame thereof. In the present embodiment, the memory capacity may be increased freely in principle as necessary by providing a plurality of such memories. The FIFO memory may have such an additional function of suitably combining a write clock frequency and a read clock frequency to realize easy time compression and expansion of the received signal.

Like the timebase processing circuit 20, the timebase processing circuit 21, which comprises, for example, a random access memory, receives signals $Y_{(2i)}$ indicative of the even-numbered lines issued from the terminal 'b' of the switch 17 as well as a signal $P_{R(2i)}$ indicative of the even-numbered lines issued from the color signal line-sequential circuit 19, performs its time-division multiplexing operation over the received signals $Y_{(2i)}$ and $P_{B(2i)}$ for each identical line to generate a time division multiplex signal $L_{(2i)}$. In the timebase processing circuit 21, further, the output sequence of lines of the time division multiplex signal $L_{(2i)}$ are controlled so that the signal $L_{(2i)}$ is divided into a second segment signal represented by (62) in Fig. 2B and output from the circuit 21 in the order of $L_2$, $L_6$, $L_{10}$, ... during a second segment duration $T_2$ corresponding to the second about 1/4 of one field of the signal represented by (65) in Fig. 2E as well as a fourth segment signal represented by (64) in Fig. 2D and output from the circuit 21 in the order of $L_4$, $L_8$, $L_{12}$, ... during a fourth segment duration $T_4$ corresponding to the fourth about 1/4 of one field of the signal represented by (65) in Fig. 2E. The timebase processing circuit 21 may have substantially the same configuration as the timebase processing circuit 20.

The segment signals 61 to 64 issued from the timebase processing circuits 20 and 21 are supplied to terminals 'a' and 'b' of the switch 22 to be alternately switched therein on its segment basis and then be sequentially output therefrom in the order of the first, second, third and fourth segment signals 61 to 64 for each field, as shown by the signal 65 in Fig. 2E. Further, in the timebase processing circuits 20 and 21, the output of the first, second, third and fourth segment signals is controlled so that such a predetermined segment blanking interval as shown by 66 in the signal 65 of Fig. 2E is created between the first, second, third and fourth segment signals.

Received at the insertion circuit 24 is such a time division multiplex signal (which will be also referred to as the TCI signal) including the first, second, third and fourth segment signals as shown by 65 in Fig. 2E. Meanwhile, the synchronizing signal generation circuit 23 generates such synchronization data as horizontal synchronizing and burst signals for each line of the TCI signal and a segment synchronizing signal for each segment thereof and sends the synchronization data to the insertion circuit 24 to add it to the TCI signal therein.

Fig. 4 shows a waveform of the TCI signal after attached by the synchronization data and then converted into an analog signal at the D/A converter 25.

In Fig. 4, numeral 71 denotes a horizontal synchronizing signal for the TCI signal, 72 a burst signal therefor, 73 a segment synchronizing signal, 74 a segment blanking interval. In the present embodiment, the segment synchronizing signal is output with the video duration of the TCI signal having the same lower level as the tip end level of the horizontal synchronizing signal 71.

Unlike the synchronizing signal disclosed in the earlier-mentioned prior art, the synchronizing signal in the present embodiment requires no special segment identification signal for identifying what numbered segment, and thus such a segment identification signal is not attached.

The TCI signal is then converted at the D/A converter 25 into an analog signal, subjected at the FM modulator 26 to an FM modulating operation, and then supplied to the recording heads 28 and 29. The thus-processed TCI signal is synchronized with the scanning operation of the recording heads, so that the recording head 28 having the + azimuth angle is scanned on the magnetic tape 30 to magnetically record the TCI signal during the first or third segment period (duration $T_1$ or $T_3$ in the signal 65 in Fig. 2E) and similarly the recording head 29 having the - azimuth angle is scanned on the magnetic tape 30 to magnetically record the TCI signal on the tape during the second or fourth segment period (duration $T_2$ or $T_4$ in the signal 65 in Fig. 2E) to magnetically record the TCI signal on the tape.

The respective segment signals recorded on the magnetic tape 30 in this way are illustrated in Fig. 3. As already explained above, in the recording mode, since the heads are alternately switched for the respective segment signals to alternately record the segment signals on the magnetic tape, these segment signals are recorded in respectively different video tracks as shown in Fig. 3. The segment blanking interval 66 is recorded in the aforementioned overlap zone ($Q_1$ or $Q_2$ in Fig. 3).

The first, second, third and fourth segment signals are recorded in this order on the tape so that the signals Y and $P_B$ of the TCI signal recorded with the + azimuth angle and corresponding to the first and third segment signals are adjacent to the signals Y and $P_R$ of the TCI signal recorded with the - azimuth angle and corresponding to the second and fourth segment signals. That is, the signal $P_B$ as one of the two color signals is recorded only in tracks of the + azimuth recording, while the signal $P_R$ as the other color signal is recorded only in tracks of the - azimuth recording, which signals $P_B$ and $P_R$ are adjacent to each other.

In the standard speed reproduction mode, the reproducing head 31 with the + azimuth angle sequentially reproduces the first and third segment signals and sends its reproduced signal to a terminal 'a' of the switch 33, while the reproducing head 32 with the - azimuth angle sequentially reproduces the second and fourth segment signals and sends its reproduced signal to a terminal 'b' of the switch 33. The switch 33 alternately switches for each head scan on the basis of a head change-over signal (not shown) generated in synchronism with the rotation of the reproducing heads 31 and 32, and outputs a continuous reproduced signal. The reproduced signal as an output of the switch 33 is demodulated at the FM demodulator 34, converted at the A/D converter 37 into a digital signal, and then applied to the switch 38. The switch 38 performs its switching operation alternately to its terminal 'a' or 'b' for each scan of the reproducing heads 31 and 32, according to the aforementioned head change-over signal. If the then head change-over position corresponds to the segment blanking interval and the switch 33 is switched to the terminal 'a', then the switch 38 outputs the first and third segment signals from its terminal 'a' to the timebase processing 39; whereas, if the switch 33 is switched to the terminal 'b', then the switch 38 outputs the second and fourth segment signals from its terminal 'b' to the timebase processing circuit 40.

That is, the signals Y and $P_B$ of the TCI signal are applied to the timebase processing circuit 39, while the signals Y and $P_R$ of the TCI signal are applied to the timebase processing circuit 40. The circuit 39, which comprises, for example, a random access memory, performs an inverse transformation or conversion over the time division multiplexing operation of the timebase processing circuit 20. More specifically, the circuit 39 converts the time sequence of the first and third segments for each line back to the original sequence, that is, restore the time sequence in the order of $L_1$, $L_3$, $L_5$, $L_7$, $L_9$, ..., and separates the two signals $Y_{(2i-1)}$ and $P_{B(2i-1)}$ from the time division multiplexed signal $L_{(2i-1)}$ to restore the timebase. The timebase processing circuit 40, which comprises, for example, also a random access memory, converts the time sequence of the second and fourth segments for each line back to the original sequence, that is, restores the time sequence in the order of $L_2$, $L_4$, $L_6$, $L_8$, $L_{10}$, ..., and separates the two signals $Y_{(2i)}$ and $P_{R(2i)}$ from the time division multiplexed signal $L_{(2i)}$ to restore the timebase. The restored signal $Y_{(2i-1)}$ is applied to a terminal 'a' of the switch 41, while the restored $Y_{(2i)}$ is applied to a terminal 'b' of the switch 41, so that, when performing its switching operation for each line, the switch 41 outputs the restored signal Y continuous in the order of $Y_1$, $Y_2$, $Y_3$, $Y_4$, ···. The color signal interpolation circuit 43 performs an adding operation over the line signals $P_{B(2i-1)}$ and

$P_{B(2i-1+2)}$ converted into a line-sequential form in the recording mode, generates an average signal, and outputs the average signal as the line signal $P_{B(2i)}$ adjacent to the both signals to thereby perform the interpolation of the line signals. Similarly, the color signal interpolation circuit 44 also performs its interpolating operation over the line signals $P_{R(2i)}$ and $P_{R(2i+2)}$ to generate a line signal $P_{R(2i+1)}$.

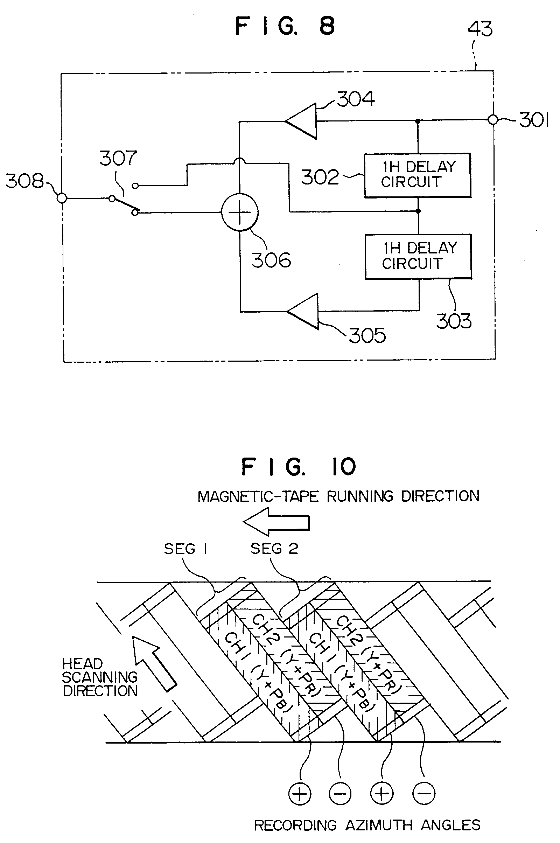

An exemplary configuration of the color signal interpolation circuit 43 for performing such operation as mentioned above is shown in Fig. 8. The configuration of Fig. 8 comprises an input terminal 301, 1H delay circuit 302 and 303, coefficient appliers 304 and 305, an adder 306, a change-over switch 306 for performing switching operation for each line, and an output terminal 308. The color signal interpolation circuit 44 also may have substantially the same configuration as the color signal interpolation circuit 43.

The D/A converters 45, 46 and 47 convert the signals Y, $P_B$ and $P_R$ thus restored continuously in the aforementioned order, into analog signals, and outputs the analog signals to the output terminals 48, 49 and 50.

In accordance with the foregoing embodiment, with respect to the color signal, only the signal $P_B$ is automatically identified and reproduced from the track with the + azimuth angle while only the signal $P_R$ is from the track with the - azimuth angle. As a result, the discrimination and separation between the color difference signals $P_B$ and $P_R$ can be easily and accurately achieved in the reproduction mode while eliminating the need for attaching such a special segment identification signal for identify what numbered segment as used in the segment recording in the prior art.

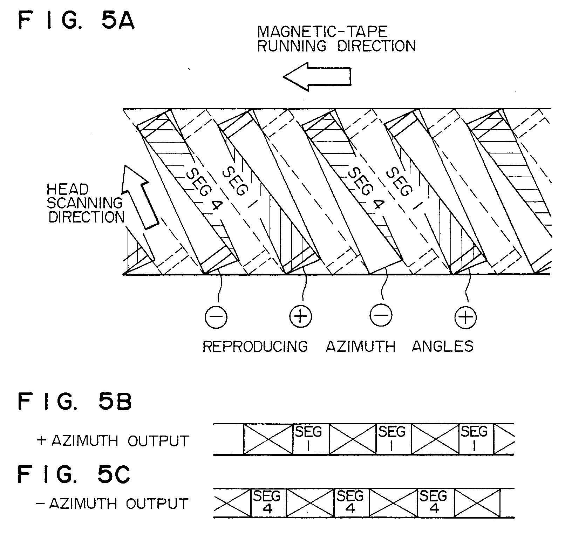

Explanation will next be made as to the special reproduction mode, in particular, such a double-speed reproduction mode as shown in Figs. 5A to 5C. In the double-speed reproduction mode, in which a tape speed is twice that of the normal reproduction mode, when the heads are scanned as shown in Fig. 5A, the reproducing head 31 with the + azimuth angle for reproducing and outputting the first and third segments reproduces only the first segment as shown in Fig. 5B, while the reproducing head 32 with the - azimuth angle for reproducing and outputting the second and fourth segments reproduces only the fourth segment as shown in Fig. 5C. In other words, since the reproducing head 31 reproduces and outputs the signals Y and $P_B$ of the TCI signal while the reproducing head 32 reproduces and outputs the signals Y and $P_R$ of the TCI signal, the signal $P_B$ is automatically distinguished from the signal $P_R$ at this time point, thus eliminating the possibility of generating a reproduced signal processing error between these signals.

Even in the special reproduction mode, the switch 38 is switched alternately to its terminal 'a' or 'b' for each scan of the reproducing head 31 and 32 in synchronism with the head change-over signal used in the switch 33.

For this reason, the first or third segment signal as the reproduced output of the reproducing head 31 is applied to the timebase processing circuit 39, whereas the second or fourth segment signal as the reproduced output of the reproducing head 32 is applied to the timebase processing circuit 40. That is, since only the signals Y and $P_B$ of the TCI signal are applied to the timebase processing circuit 39 while only the signals Y and $P_R$ of the TCI signal are applied to the timebase processing circuit 40, the circuit 39 or 40 can perform substantially the same processing as in the standard speed reproduction mode.

As mentioned above, even in the double-speed reproduction mode, the separation between the signals $P_B$ and $P_R$ can be reliably realized while eliminating the need for the discriminating operation between the two color signals. In addition, not only in the aforementioned double-speed reproduction mode but also in the special reproduction mode where a tape speed is arbitrary, the similar effects can be attained and thus an image with normal hue can be reproduced.

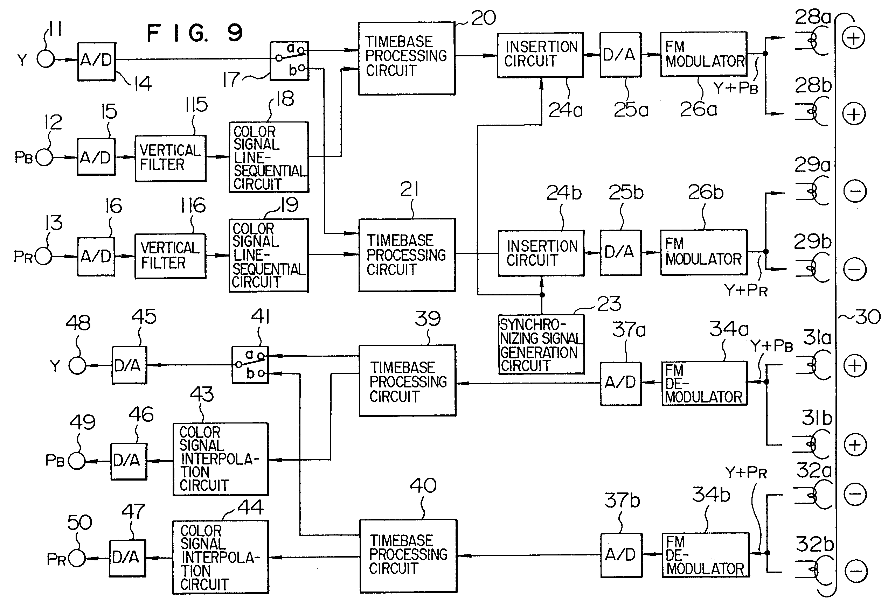

Next, explanation will be directed to a video signal recording/reproducing system of a 2-channel/2-segment recording type in accordance with a second embodiment of the present invention. Fig. 9 shows an arrangement of the second embodiment.

The second embodiment is different from the first embodiment of Fig. 1 in that output signals of the timebase processing circuits 20 and 21 are sent via two channels of a pair of insertion circuits 24a and 24b. D/A converters 25a and 25b and FM modulators 26a and 26b to two sets of recording heads 28a and 28b having the + azimuth angle and 29a and 29b having the - azimuth angle to be recorded on the magnetic tape; whereas, in the reproduction mode, reproduction is carried out through two sets of reproducing heads 31a and 31b having the + azimuth angle and 32a and 32b having the - azimuth angle to obtain reproduced signals which are then supplied through a pair of FM demodulators 34a and 34b and A/D converters 37a and 37b to a pair of timebase processing circuits 39 and 40.

In this case, the pair of recording heads 28a and 28b or 29a and 29b are mounted to a head drum (not shown) as spaced from each other by an angle of 180 degrees, while the pair of reproducing heads 31a and 31b or 32a and 32b are also mounted to the head drum as spaced from each other by an angle of 180 degrees. In this conenction, the recording heads 28a and 29a are set to be scanned on the magnetic tape substantially at the same time, while the recording heads 28b and 29b are also set to be scanned on the magnetic tape substantially at the same time.

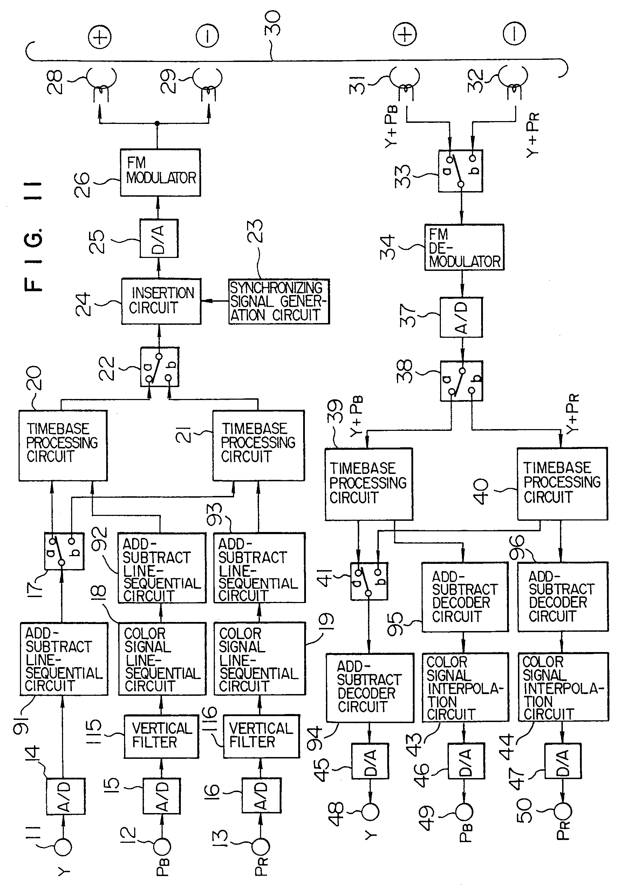

Shown in Fig. 10 is a pattern recorded on the magnetic tape in the present embodiment.

With the second embodiment, in the recording mode, video signals are sent through the same signal processing circuits as in the first embodiment to the timebase processing circuits 20 and 21 to be converted into a first channel signal corresponding to the signals Y and $P_B$ of the TCI signal and a second channel signal corresponding to the signals Y and $P_R$ of the TCI signal, and each of these channel signals are further divided into two segment signals for one field. At this time, the first segment signal corresponding to the signals Y and $P_B$ of the first channel signals is converted into such a signal as shown by 61 in Fig. 2A, while the second segment signal is converted into such a signal as shown by 63 in Fig. 2C. The first segment signal corresponding to the signals Y and $P_R$ of the second channel is converted into such a signal as shown by 62 in Fig. 2B, while the second segment signal is converted into such a signal as shown by 64 in Fig. 2C.

The signals Y and $P_B$ of the TCI signal as the output of the circuit 20 are sent through the insertion circuit 24a, the D/A converter 25a and the FM modulator 26a to the two recording heads 28a and 28b to be recorded on the magnetic tape on a segment basis. On the other hand, the signals Y and $P_R$ of the TCI signal as the output of the circuit 21 are sent through the insertion circuit 24b, the D/A converter 25b and the FM modulator 26b to the two recording heads 29a and 29b to be recorded on the magnetic tape on a segment basis.

As a result, as shown in Fig. 10, the signals Y and $P_B$ of the TCI signal recorded with the + azimuth angle and the signals Y and $P_R$ of the TCI signal recorded with the - azimuth angle are located alternate video tracks on a segment basis.

In the reproduction mode, the signals Y and $P_B$ of the TCI signal are reproduced at the reproducing heads 31a and 31b and then sent through the FM modulator 34a and the A/D converter 37a to the timebase processing circuit 39; whereas the signals Y and $P_R$ of the TCI signal are reproduced at the reproducing heads 32a and 32b and then sent through the FM demodulator 34b and the A/D converter 37b to the timebase processing circuit 40.

The signals Y and $P_B$ of the TCI signal are applied to the timebase processing circuit 39 and the signals Y and $P_R$ of the TCI signal are applied to the timebase processing circuit 40, and thereafter these signals are subjected to the same signal processing operation as in the first embodiment to restore the original signals Y, $P_B$ and $P_R$.

As already explained in the foregoing, in the present embodiment, the signals Y and $P_B$ of the TCI signal as well as the signals Y and $P_R$ of the TCI signal are processed in the different routes for recording and reproduction, which results in that a hue error in the color signal caused by erroneous detection of the signals $P_B$ and $P_R$ can be prevented.

A third embodiment will then be explained in the case where a video signal subjected to a band comprising operation is to be recorded and reproduced.

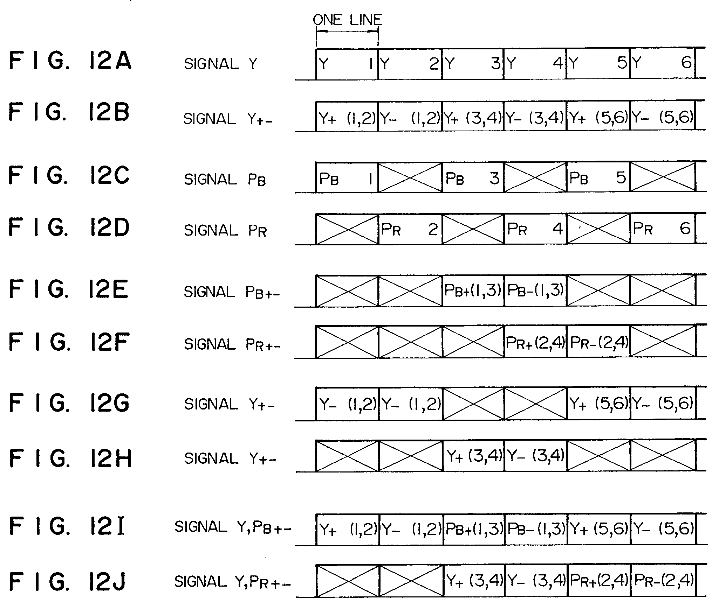

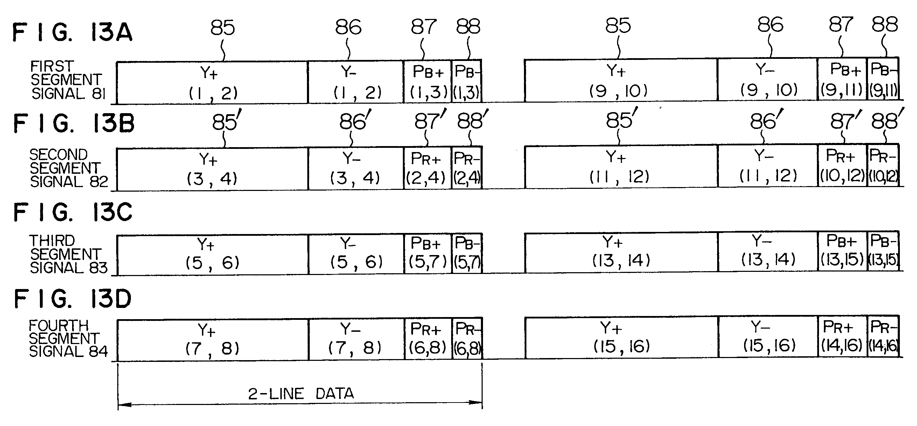

Explanation will be made in connection with an example where, as the band compressing operation, two adjacent vertical lines in an image are converted into addition and subtraction components and the subtraction component is subjected to a 1/2 timebase compression to be recorded on a 4 segment basis as in the first embodiment, by referring to a block diagram of Fig. 11. Figs. 12a to 12J show signals for explaining how to convert to addition (+) and subtraction (-) signals, and Figs. 13A to 13D show the details of the TCI signal.

In the recording-signal processing system, a signal Y as an input signal is converted into a digital signal and then sent to the add-subtract line-sequential circuit 91 where addition and subtraction are performed between an odd-numbered line signal and the subsequent even-numbered line signal in the digital signal Y. That is, the adding operation results in generation of an addition signal $Y_+$ and, while the subtracting operation results in generation of a subtraction signal $Y_-$. More specifically the subtraction signal is obtained by subjecting adjacent horizontal samples to a filtering operation and then thinning out samples on every other sample basis. Thus, the subtraction signal $Y_-$ is reduced to 1/2 of the addition signal $Y_+$. The circuit 91 further delays the subtraction signal $Y_-$ by one line to obtain a line sequential signal of the signals $Y_+$ $Y_-$ that is shown by 2 in Fig. 12B with respect to the input signal Y shown by 1 in Fig. 12A. In Figs. 12A to 12J, (i, j) in each signal denotes a signal obtained by performing the adding or subtracting operation over the i-th and j-th signals.

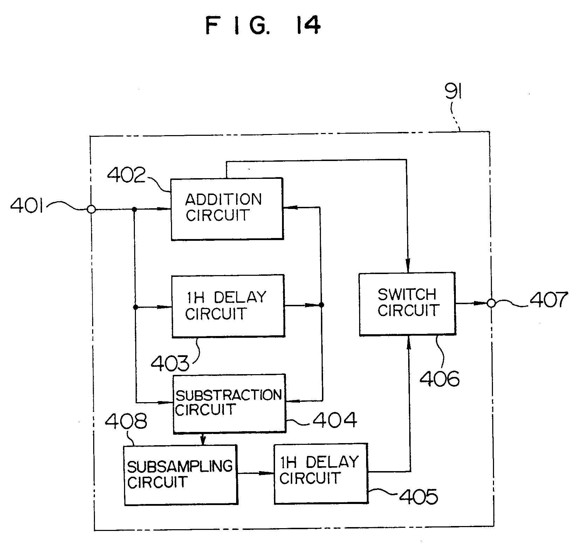

Fig. 14 is an exemplary configuration of the add-subtract line-sequential circuit 91 for performing such operation as mentioned above. The circuit of Fig. 14 comprises an input terminal 401, an addition circuit 402, a 1H delay circuit 403, a subtraction circuit 404, a subsampling circuit 408 for performing a filtering operation over adjacent horizontal samples and thinning out samples on every other sample basis to reduce the number of samples to half, a 1H delay circuit 405, and a switch circuit 406. The aforementioned line sequential signal is alternately switched at the switch 17 with respect to each set of the signals $Y_+$ and $Y_-$ corresponding to one line to obtain such signals as shown in Figs. 12G and 12H alternately, which signals are then sent to the timebase processing circuits 20 and 21 repsectively.

Meanwhile, the signals $P_B$ and $P_R$ are converted at the color signal line-sequential circuits 18 and 19 into such line sequential signals as shown in Figs. 12C and 12D, which line sequential signals are then sent to the add-subtract line-sequential circuits 92 and 93 where, like the signal Y, the line sequential signals are converted into addition signals $P_{B+}$ and $P_{R+}$ and subtraction signals $P_{B-}$ and $P_{R-}$ that are further subjected to a line-sequential processing, which results in acquisition of such signals as shown in Figs. 12E and 12F. The signals in Figs. 12E and 12F are further applied to the timebase processing circuits 20 and 21 respectively. Each of the add-subtract line-sequential circuits 92 and 93 may have substantially the same configuration as the add-subtract line-sequential circuit 91. In this case, however, the 1H delay circuits 403 and 405 are replaced by 2H delay circuits (not shown).

The timebase processing circuit 20 receives the Y-associated signal shown in Fig. 12G and the $P_B$-associated signal shown in Fig. 12E, converts the line-unit time sequence of the signals to form such a signal with a set of 4-line signals arranged in the order of $Y_+$, $Y_-$, $P_{B+}$ and $P_{B-}$ as shown in Fig. 12I, and divides the signal shown in Fig. 12I into such first and third segment signals as shown by 81 and 83 in Figs. 13A and 13C.

At this time, since the sampling frequency at the time of A/D conversion of the signal $P_B$ is set to be 1/4 of that of the signal Y, the number of samples within one line for the signal $P_B$ is 1/4 of that for the signal Y. Further, since the subtraction signal is set to be 1/2 of the addition signal as mentioned above, the data ratio of the signals $Y_+$, $Y_-$, $P_{B+}$ and $P_{B-}$ is set to be 8:4:2:1. Thus, the clock ratio of the above 4 signals is set to be the same as the above data ratio with respect to the reference signal $Y_+$, so that such first and third segment signals containing the signals Y and $P_B$ as shown by 81 and 83 in Figs. 13A and 13C can be obtained.

Meanwhile, the timebase processing circuit 21 receives the Y-associated signal shown in Fig. 12H and the $P_R$-associated signal in Fig. 12F, converts the line-unit time sequence of the signals to form such a signal with a set of 4-line signals arranged in the order of $Y_+$, $Y_-$, $P_{B+}$ and $P_{B-}$ as shown in Fig. 12J, and divides the signal shown in Fig. 12J into such second and fourth segment signals as shown by 82 and 84 in Figs. 13B and 13D. The data ratio of the signals $Y_+$, $Y_-$, $P_{R+}$ and $P_{R-}$ is set to be 8:4:2:1 as in the circuit 20. Thus, when the clock ratio of the above 4 signals is set to be the same as the above data ratio with respect to the reference signal Y+, such second and fourth segment signals containing the signals Y and $P_R$ as shown by 82 and 84 in Figs. 13B and 13D can be obtained.

The switch 22 switches the output of the circuit 20 received at its terminal 'a' and the output of the circuit 21 received at its terminal 'b' on a segment basis and outputs them in the order of the first, second, third and fourth segment signals. The above 4 segment signals are subjected to the synchronizing signal insertion, analog conversion, FM modulation at the corresponding processing circuits as in the first embodiment, so that the first and third segment signals are supplied to the recording head 28 with the + azimuth while the second and fourth segment signals are supplied to the recording head 29 with the - azimuth angle to be both recorded on the magnetic tape 30.

Even in the reproduction mode, as in the first embodiment, the output of the reproducing head 31 is sent to the terminal 'a' of the switch 33, while the output of the reproducing head 32 is sent to the terminal 'b' of the switch 33 to switch these output signals at each reproduction-mode head change-over point and to obtain a continuous signal. The continuous signal is subjected to an FM modulation and a digital conversion and then sent to the switch 38 synchronized with the switch 33. The switch 33 switchingly outputs the signals Y and $P_B$ of the TCI signal corresponding to the first or third segment from its terminal 'a' to the timebase processing circuit 39, while outputs the signals Y and $P_R$ of the TCI signal corresponding to the second or fourth segment from its terminal 'b' to the circuit 40.

The timebase processing circuits 39 and 40 perform an inverse transformation or conversion of the timebase processing in the recording system to separate the signals Y and $P_B$ or $P_R$ from the input signals. At this time, the color difference signal is converted into such signals as shown in Figs. 12E and 12F, while the luminance signal is converted at the switch 41 into such a signal as shown in Fig. 12B. The add-subtract decoder circuits 94, 95 and 96 perform a sample interpolating operation over the subtraction signal of the signals Y, $P_B$ and $P_R$ and adding/subtracting operation thereover to thereby obtain such signal as shown in Figs. 13A, 13C and 13D.

Hereinafter, the color difference signals are subjected to the line interpolating operation and then to the analog conversion to obtain reproduced signals.

Even when the band compressed signal is recorded on the segment division basis in such a manner as mentioned above, the two color difference components can be automatically distinguished and separated as in the first embodiment at the time of recording and recording, a hue error caused by a color difference signal error can be prevented from being generated both in the standard speed reproduction mode and in the special reproduction mode.

As has been disclosed in the foregoing, in accordance with the present invention, there is provided a segment recording or channel divided recording system which, in both normal and sepcial reproduction modes, can eliminate the need for the use of a special circuit for discriminating and separating color signal components and which can allow easy and accurate discrimination and separation of two sorts of color signals. As a result, a hue error in a reproduced image caused by the two signals mixed can be prevented.

The present invention is not limited to the foregoing specific embodiments.

For example, although the recording and reproducing heads have been separately provided in the foregoing embodiments, the both heads may be combinedly used. When the latter is employed for example, in Fig. 1, the heads 31 and 32 are removed and a switch (not shown) is provided so that the heads 28 and 29 are connected to the FM modulator 26 in its recording mode and are connected to the switch 33 in its reproduction mode, whereby the heads 28 and 29 can be commonly used in both the recording and reproduction modes.

Further, a guard band is not provided between video tracks in the foregoing embodiments, but such a guard band may be provided as necessary.

Furthermore, the numbers of heads, segments and channels to be employed cannot be restricted to the specific values used in the foregoing embodiments.

In accordance with the present invention, a specific method of carrying out the time division multiplexing operation between a luminance signal and a first color signal and a specific method carrying out the time division multiplexing operation between the luminance signal and a second color signal are not restricted to those disclosed in the foregoing embodiments and may be embodied in various ways, so long as the luminance signal and the first color signal can be recorded in tracks with a predetermined azimuth angle while the luminance signal and the second color signal can be recorded in tracks with a different azimuth angle.

**Claims**

1. A video signal recording system for reproducing a video signal including a luminance signal (Y), a first color signal ($P_B$) and a second color signal ($P_R$) in a plurality of mutually obliquely parallel tracks on a magnetic tape (30), said video signal recording system comprising:

at least two heads (28, 29, 28a, 28b, 29a, 29b) having different azimuth angles for forming said plurality of tracks;

first signal processing means (14, 15, 115, 17, 18, 20, 22, 25, 26, 25a, 26a, 91, 92) for processing said luminance signal (Y) and said first color signal ($P_B$) and for applying its processed signals to one (28, 28a, 28b) of said at least two heads (28, 29, 28a, 28b, 29a, 29b) having a predetermined azimuth angle to record a signal based on said luminance signal (Y) and said first color signal ($P_B$) in the tracks formed by said head (28, 28a, 28b) having said predetermined azimuth angle; and

second signal processing means (14, 16, 116, 17, 19, 21, 22, 25, 26, 25b, 26b, 91, 93) for processing said luminance signal (Y) and said second color signal ($P_R$) and for applying its processed signals to the other (29, 29a, 29b) of said at least two heads (28, 29, 28a, 28b, 29a, 29b) having another azimuth angle different from said predetermined azimuth angle to record a signal based on said luminance signal (Y) and said second color signal ($P_R$) in the tracks formed by the other head (29, 29a, 29b) having said another azimuth angle.

2. A video signal recording system as set forth in claim 1, wherein said first signal processing means (14, 15, 115, 17, 18, 20, 22, 25, 26, 25a, 26a, 91, 92) includes means (20) for performing a time division multiplexing operation over a first signal based on said luminance signal (Y) and a second signal based on said first color signal ($P_B$), and said second signal processing means (14, 16, 116, 17, 19, 21, 22, 25, 26, 25b, 26b, 91, 93) includes means (21) for performing a time division multiplexing operation over a third signal based on said luminance signal (Y) and a fourth signal based on said second color signal ($P_R$).

3. A video signal recording system as set forth in claim 2, further comprising means (18, 19, 92, 93) for alternately extracting said first color signal ($P_B$) and said second color signal ($P_R$) on every n-line basis (n being an integer of 1 or more) to obtain said second and fourth signals on a line sequential basis.

4. A video signal recording system as set forth in claim 2, further comprising means (17, 91) for alternately extracting said luminance signal (Y) on every n-line basis (n being an integer of 1 or more) to obtain said first and third signals.

5. A video signal recording system as set forth in claim 1, wherein said system comprises said at least two sets of heads (28, 29, 28a, 28b, 29a, 29b), each set having L heads (L being an even number of 2 or more) records said video signal of one field duration in L divided channels, said first signal processing means (14, 15, 115, 17, 18, 20, 25a, 26a, 91, 92) includes means (20, 25a, 26a) for applying said processed signal based on said luminance signal (Y) and said first color signal ($P_B$) to said heads (28, 28a, 28b) having said predetermined azimuth angle to record said processed signal in the tracks of odd-numbered channels in said one field duration, and said second signal processing means (14, 16, 116, 17, 19, 21, 25b, 26b, 91, 93) includes means (21, 25b, 26b) for applying said processed signal based on said luminance signal (Y) and said second color signal ($P_R$) to said heads (29, 29a, 29b) having said another azimuth angle to record said processed signal in the tracks of even-numbered channels in said one field duration.

6. A video signal recording/reproducing system for recording and reproducing a video signal including a luminance signal (Y), a first color signal ($P_B$) and a second color signal ($P_R$) in a plurality of mutually obliquely parallel tracks on a magnetic tape (30), said video signal recording/reproducing system including recording and reproducing parts, said recording part comprising:

at least two recording heads (28, 29, 28a, 28b, 29a, 29b) having different azimuth angles for forming said plurality of tracks;

first signal processing means (14, 15, 115, 17, 18, 20, 22, 25, 26, 25a, 26a, 91, 92) for processing said luminance signal (Y) and said first color signal ($P_B$) and for applying its processed signals to one (28, 28a, 28b) of said at least two recording heads (28, 29, 28a, 28b, 29a, 29b) having a predetermined azimuth angle to record a signal based on said luminance signal (Y) and said first color signal ($P_B$) in the tracks formed by said recording head (28, 28a, 28b) having said predetermined azimuth angle; and

second signal processing means (14, 16, 116, 17, 19, 21, 22, 25, 26, 25b, 26b, 91, 93) for processing said luminance signal (Y) and said second color signal ($P_R$) and for applying its processed signals to the other (29, 29a, 29b) of said at least two recording heads (28, 29, 28a, 28b, 29a, 29b) having another azimuth angle different from said predetermined azimuth angle to record a signal based on said luminance signal (Y) and said second color signal ($P_R$) in the tracks formed by the other recording head (29, 29a, 29b) having said another azimuth angle,

and said reproducing part comprising:

at least two reproducing heads (31, 32, 31a, 31b, 32a, 32b) having substantially the same azimuth angles as said at least two recording heads (28, 29, 28a, 28b, 29a, 29b);

third signal processing means (33, 34, 37, 38, 39, 41, 43, 45, 46, 34a, 37a, 94, 95) for reproducing said luminance signal (Y) and said first color signal ($P_B$) on the basis of a reproduced signal obtained from one (31, 31a, 31b) of said at least two reproducing heads having said predetermined azimuth angle; and

fourth signal processing means (33, 34, 37, 38, 40, 41, 44, 45, 47, 34b, 37b, 94, 96) for reproducing said luminance signal (Y) and said second color signal ($P_R$) on the basis of a reproduced signal obtained from the other (32, 32a, 32b) of said at least two reproducing heads having said another azimuth angle.

7. A magnetic recording/reproducing system having at least two rotary heads (28, 28a, 28b, 29, 29a, 29b) having mutually different first and second azimuth angles respectively, wherein a video signal including a luminance signal (Y) and first and second color signals ($P_B$, $P_R$) and corresponding to one field duration is divided into M channels (M being an integer of 1 or more), each of said channels is divided into N segments (N being an integer of 1 or more), said rotary head (28, 28a, 28b) having said first azimuth angle records the video signal in odd-numbered tracks of M x N obliquely parallel and adjacent tracks on a magnetic tape (30), and said rotary head (29, 29a, 29b) having said second azimuth angle records the video signal in even-numbered tracks of said M x N tracks, said system comprising:

first recording means (14, 15, 115, 17, 18, 20, 22, 25, 26, 25a, 26a, 91, 92) for applying a signal based on said luminance signal (Y) and said first color signal ($P_B$) to said rotary head (28, 28a, 28b) having said first azimuth angle to record said signal; and

second recording means (14, 16, 116, 17, 19, 21, 22, 25, 26, 25b, 26b, 91, 93) for applying a signal based on said luminance signal (Y) and said second color signal ($P_R$) to said rotary head (29, 29a, 29b) having said second azimuth angle to record said signal.

8. A magnetic recording/reproducing system as set forth in claim 7, wherein said first recording means (14, 15, 115, 17, 18, 20, 22, 25, 26, 25a, 26a, 91, 92) includes means (20) for performing a time division multiplexing operation over a first signal based on said luminance signal (Y) and a second signal based on said first color signal ($P_B$), and said second recording means (14, 16, 116, 17, 19, 21, 22, 25, 26, 25b, 26b, 91, 93) includes means (21) for performing a time division multiplexing operation over a third signal based on said luminance signal (Y) and a fourth signal based on said second color signal ($P_R$).

9. A magnetic recording/reproducing system as set forth in claim 8, wherein said first recording means (14, 15, 115, 17, 18, 20, 22, 25, 26, 25a, 26a, 91, 92) includes means (115, 18, 20) for extracting said first color signal ($P_B$) in its one field duration in a period of M x N lines on every line basis to obtain said second signal, and said second recording means (14, 16, 116, 17, 19, 21, 22, 25, 26, 25b, 26b, 91, 93) includes means (116, 19, 21) for extracting said second color signal ($P_R$) in its one field duration in a period of M x N lines on every line basis to obtain said fourth signal.

10. A magnetic recording/reproducing system as set forth in claim 8, wherein said first recording means (14, 15, 115, 17, 18, 20, 22, 25, 26, 25a, 26a, 91, 92) includes means (17, 20) for extracting said luminance signal (Y) in its one field duration in a period of M x N lines on every line basis to obtain said first signal, and said second recording means (14, 16, 116, 17, 19, 21, 22, 25, 26, 25b, 26b, 91, 93) includes means (17, 21) for extracting said luminance signal (Y) in its one field duration in a period of M x N lines on every line basis to obtain said third signal.

11. A magnetic recording/reproducing system as set forth in claim 8, wherein said first recording means (14, 15, 115, 17, 18, 20, 22, 25, 26, 25a, 26a, 91, 92) includes means (92) for extracting two signals from said first color signal ($P_B$) in a period of M x N x 2 lines on every line basis to obtain said second signal on the basis of addition and subtraction components of said extracted two signals, and said second recording means (14, 16, 116, 17, 19, 21, 22, 25, 26, 25b, 26b, 91, 93) includes means (93) for extracting two signals from said second color signal ($P_R$) in a period of M x N x 2 lines on every line basis to obtain said fourth signal on the basis of addition and subtraction components of said extracted two signals.

12. A magnetic recording/reproducing system as set forth in claim 8, wherein said first recording means (14, 15, 115, 17, 18, 20, 22, 25, 26, 25a, 26a, 91, 92) includes means (91) for extracting two signals from said luminance signal (Y) in a period of M x N x 2 lines on every line basis to obtain said first signal on the basis of addition and subtraction components of said extracted two signals, and said second recording means (14, 16, 116, 17, 19, 21, 22, 25, 26, 25b, 26b, 91, 93) includes means (91) for extracting two signals from said luminance signal (Y) in a period of M x N x 2 lines on every line basis to obtain said third signal on the basis of addition and subtraction components of said extracted two signals.

13. A magnetic recording/reproducing system as set forth in claim 9, wherein said first recording means (14, 15, 115, 17, 18, 20, 22, 25, 26, 25a, 26a, 91, 92) includes means (115, 18, 20) for extracting said first color signal ($P_B$) on every line basis to obtain said second signal and to record odd-numbered (or even-numbered) line signals of said first color signal ($P_B$) in said odd-numbered tracks, and said second recording means (14, 16, 116, 17, 19, 21, 22, 25, 26, 25b, 26b, 91, 93) includes means (116, 19, 21) for extracting said second color signal ($P_R$) on every line basis to obtain said fourth signal and to record even-numbered (or odd-numbered) line signals of said second color signal ($P_R$) in said even-numbered tracks.

14. A magnetic recording/reproducing system as set forth in claim 10, wherein said first recording means (14, 15, 115, 17, 18, 20, 22, 25, 26, 25a, 26a, 91, 92) includes means (17, 20) for extracting said luminance signal (Y) on every line basis to obtain said first signal and to record odd-numbered (or even-numbered) line signals of said luminance signal (Y) in said odd-numbered tracks, and said second recording means (14, 16, 116, 17, 19, 21, 22, 25, 26, 25b, 26b, 91, 93) includes means (17, 21) for extracting said luminance signal (Y) on every line basis to obtain said third signal and to record even-numbered (or odd-numbered) line signals of said luminance signal (Y) in said even-numbered tracks.

15. A video signal recording method for recording a video signal including a luminance signal (Y), a first color signal ($P_B$) and a second color signal ($P_R$) in a plurality of mutually obliquely parallel tracks on a magnetic tape (30), said video signal recording method comprising:
    a step of forming said plurality of tracks by means of at least two heads (28, 29, 28a, 28b, 29a, 29b) having different azimuth angles;

first signal processing step of processing said luminance signal (Y) and said first color signal ($P_B$) and applying its processed signals to one (28, 28a, 28b) of said at least two heads (28, 29, 28a, 28b, 29a, 29b) having a predetermined azimuth angle to record a signal based on said luminance signal (Y) and said first color signal ($P_B$) in the tracks formed by said head (28, 28a, 28b) having said predetermined azimuth angle; and
    second signal processing step of processing said luminance signal (Y) and said second color signal ($P_B$) and applying its processed signals to the other (29, 29a, 29b) of said at least two heads (28, 29, 28a, 28b, 29a, 29b) having another azimuth angle different from said predetermined azimuth angle to record a signal based on said luminance signal (Y) and said second color signal ($P_R$) in the tracks formed by the other head (29, 29a, 29b) having said another azimuth angle.

16. A video signal recording method as set forth in claim 15, wherein said first signal processing step has a step of performing a time division multiplexing operation over a first signal based on said luminance signal (Y) and a second signal based on said first color signal ($P_B$), and said second signal processing step has a step of performing a time division multiplexing operation over a third signal based on said luminance signal (Y) and a fourth signal based on said second color signal ($P_R$).

17. A video signal recording method as set forth in claim 16, further comprising a step of alternately extracting said first color signal ($P_B$) and said second color signal ($P_R$) on every n-line basis (n being an integer of 1 or more) to obtain said second and fourth signals on a line sequential basis.

18. A video signal recording method as set forth in claim 16, further comprising a step of alternately extracting said luminance signal (Y) on every n-line basis (n being an integer of 1 or more) to obtain said first and third signals.

19. A video signal recording method as set forth in claim 15, further comprising a step of recording said video signal of one field duration in L divided channels by means of said at least two sets of heads (28, 29, 28a, 28b, 29a, 29b), each set having L heads (L being an even number of 2 or more), and wherein said first signal processing step has a step of applying said processed signal based on said luminance signal (Y) and said first color signal ($P_B$)

to said heads (28, 28a, 28b) having said predetermined azimuth angle to record said processed signal in the tracks of odd-numbered channels in said one field duration, and said second signal processing step has a step of applying said processed signal based on said luminance signal (Y) and said second color signal ($P_R$) to said heads (29, 29a, 29b) having said another azimuth angle to record said processed signal in the tracks of even-numbered channels in said one field duration.

20. A video signal recording/reproducing method for recording and reproducing a video signal including a luminance signal (Y), a first color signal ($P_B$) and a second color signal ($P_R$) in a plurality of mutually obliquely parallel tracks on a magnetic tape (30), said video signal recording/reproducing method including recording and reproducing steps, said recording step comprising:

a step of forming said plurality of tracks by means of at least two recording heads (28, 29, 28a, 28b, 29a, 29b) having different azimuth angles;

first signal processing step of processing said luminance signal (Y) and said first color signal ($P_B$) and applying its processed signals to one (28, 28a, 28b) of said at least two recording heads (28, 29, 28a, 28b, 29a, 29b) having a predetermined azimuth angle to record a signal based on said luminance signal (Y) and said first color signal ($P_B$) in the tracks formd by said recording head (28, 28a, 28b) having said predetermined azimuth angle; and

second signal processing step of processing said luminance signal (Y) and said second color signal ($P_R$) and applying its processed signals to the other (29, 29a, 29b) of said at least two recording heads (28, 29, 28a, 28b, 29a, 29b) having another azimuth angle different from said predetermined azimuth angle to record a signal based on said luminance signal (Y) and said second color signal ($P_R$) in the tracks formed by the other recording head (29, 29a, 29b) having said another azimuth angle,

and said reproducing step comprising:

a step of scanning said magnetic tape (30) by means of at least two reproducing heads (31, 32, 31a, 31b, 32a, 32b) having substantially the same azimuth angles as said at least two recording heads (28, 29, 28a, 28b, 29a, 29b);

third signal processing step of reproducing said luminance signal (Y) and said first color signal ($P_B$) on the basis of a reproduced signal obtained from one (31, 31a, 31b) of said at least two reproducing heads having said predetermined azimuth angle; and

fourth signal processing step of reproducing said luminance signal (Y) and said second color signal ($P_R$) on the basis of a reproduced signal obtained from the other (32, 32a, 32b) of said at least two reproducing heads having said another azimuth angle.

21. A magnetic reocridng/reproducing method for recording a video signal including a luminance signal (Y) and first and second color signals ($P_B$, $P_R$) and corresponding to one field duration by means of at least two rotary heads (28, 28a, 28b, 29, 29a, 29b) having mutually different first and second azimuth angles respectively as divided into M channels (M being an integer of 1 or more), each of said channels being divided into N segments (N being an integer of 1 or more), said rotary head (28, 28a, 28b) having said first azimuth angle records the video signal in odd-numbered tracks of M x N obliquely parllel and adjacent tracks on a magnetic tape (30), said rotary head (29, 29a, 29b) having said second azimuth angle recording the video signal in even-numbered tracks of said M x N tracks, said method comprising:

a first recording step of applying a signal based on said luminance signal (Y) and said first color signal ($P_B$) to said rotary head (28, 28a, 28b) having said first azimuth angle to record said signal; and

a second recording step of applying a signal based on said luminance signal (Y) and said second color signal ($P_R$) to said rotary head (29, 29a, 29b) having said second azimuth angle to record said signal.

22. A magnetic recording/reproducing method as set forth in claim 21, wherein said first recording step has a step of performing a time division multiplexing operation over a first signal based on said luminance signal (Y) and a second signal based on said first color signal ($P_B$), and said second recording step has a step of performing a time division multiplexing operation over a third signal based on said luminance signal (Y) and a fourth signal based on said second color signal ($P_R$).

23. A magnetic recording/reproducing method as set forth in claim 22, wherein said first recording step has a step of extracting said first color signal ($P_B$) in its one field duration in a period of M x N lines on every line basis to obtain said second signal, and said second recording step has a step of extracting said second color signal ($P_R$) in its one field duration in a period of M x N lines on every line basis to obtain said fourth signal.

24. A magnetic recording/reproducing method as set forth in claim 22, wherein said first recording step has a step of extracting said luminance signal (Y) in its one field duration in a period of M x N lines on every line basis to obtain said first signal, and said second recording step has a step of extracting said luminance signal (Y) in its one field duration in a period of M x N lines on every line basis to obtain said third signal.

25. A magnetic recording/reproducing method as set forth in claim 22, wherein said first recording step has a step of extracting two signals from said first color signal ($P_B$) in a period of M x N x 2 lines on every line basis to obtain said second signal on the basis of addition and subtraction components of said extracted two signals, and said second recording step has a step of extracting two signals from said second color signal ($P_R$) in a period of M x N x 2 lines on every line basis to obtain said fourth signal on the basis of addition and subtraction components of said extracted two signals.

26. A magnetic recording/reproducing method as set forth in claim 22, wherein said first recording step has a step of extracting two signals from said luminance signal (Y) in a period of M x N x 2 lines on every line basis to obtain said first signal on the basis of addition and subtraction components of said extracted two signals, and said second recording step has a step of extracting two signals from said luminance signal (Y) in a period of M x N x 2 lines on every line basis to obtain said third signal on the basis of addition and subtraction components of said extracted two signals.

27. A magnetic recording/reproducing method as set forth in claim 23, wherein said first recording step has a step of extracting said first color signal ($P_B$) on every line basis to obtain said second signal and to record odd-numbered (or even-numbered) line signals of said first color signal ($P_B$) in said odd-numbered tracks, and said second recording step has a step of extracting said second color signal ($P_R$) on every line basis to obtain said fourth signal and to record even-numbered (or odd-numbered) line signals of said second color signal ($P_R$) in said even-numbered tracks.

28. A magnetic recording/reproducing method as set forth in claim 24, wherein said first recording step has a step of extracting said luminance signal (Y) on every line basis to obtain said first signal and to record odd-numbered (or even-numbered) line signals of said luminance signal (Y) in said odd-numbered tracks, and said second recording step has a step of extracting said luminance signal (Y) on every line basis to obtain said third signal and to record even-numbered (or odd-numbered) line signals of said luminance signal (Y) in said even-numbered tracks.

FIG. I

FIG. 2A

FIRST SEGMENT SIGNAL 61

| Y1 | PB1 | Y5 | PB5 |
|----|-----|----|-----|

L1 ⌇ L5

FIG. 2B

SECOND SEGMENT SIGNAL 62

| Y2 | PR2 | Y6 | PR6 |
|----|-----|----|-----|

L2 ⌇ L6

FIG. 2C

THIRD SEGMENT SIGNAL 63

| Y3 | PB3 | Y7 | PB7 |
|----|-----|----|-----|

L3 ⌇ L7

FIG. 2D

FOURTH SEGMENT SIGNAL 64

| Y4 | PR4 | Y8 | PR8 |
|----|-----|----|-----|

L4 ⌇ L8

ONE LINE

FIG. 2E

| 66 | 66 | 66 | 66 | 66 |
|----|----|----|----|----|
| #1 | #2 | #3 | #4 | |
| 61 | 62 | 63 | 64 | 61 |
| T1 | T2 | T3 | T4 | |

64

ONE FIELD

# F I G. 3

MAGNETIC-TAPE
RUNNING DIRECTION

$Q_2$

HEAD
SCANNING
DIRECTION

SEG 1

SEG 2

SEG 3

SEG 4

$Q_1$

$\oplus$ $\ominus$ $\oplus$ $\ominus$

RECORDING AZIMUTH ANGLES

# F I G. 4

72  72  72  72

71  71  73  73

74

# F I G. 5A

MAGNETIC-TAPE
RUNNING DIRECTION

HEAD
SCANNING
DIRECTION

SEG 4    SEG 1    SEG 4    SEG 1

$\ominus$    $\oplus$    $\ominus$    $\oplus$

REPRODUCING   AZIMUTH   ANGLES

# F I G. 5B

+ AZIMUTH OUTPUT    SEG 1    SEG 1    SEG 1

# F I G. 5C

− AZIMUTH OUTPUT    SEG 4    SEG 4    SEG 4

19

## F I G. 6

## F I G. 7

# F I G. 8

# F I G. 10

MAGNETIC-TAPE RUNNING DIRECTION

RECORDING AZIMUTH ANGLES

FIG. 9

FIG. II

EP 0 477 905 A2

ONE LINE

FIG. 12A    SIGNAL Y

| Y  1 | Y  2 | Y  3 | Y  4 | Y  5 | Y  6 |

FIG. 12B    SIGNAL Y+−

| Y+ (1,2) | Y− (1,2) | Y+ (3,4) | Y− (3,4) | Y+ (5,6) | Y− (5,6) |

FIG. 12C    SIGNAL PB

| PB  1 | ✕ | PB  3 | ✕ | PB  5 | ✕ |

FIG. 12D    SIGNAL PR

| ✕ | PR  2 | ✕ | PR  4 | ✕ | PR  6 |

FIG. 12E    SIGNAL PB+−

| ✕ | ✕ | PB+(1,3) | PB−(1,3) | ✕ | ✕ |

FIG. 12F    SIGNAL PR+−

| ✕ | ✕ | ✕ | PR+(2,4) | PR−(2,4) | ✕ |

FIG. 12G    SIGNAL Y+−

| Y− (1,2) | Y− (1,2) | ✕ | ✕ | Y+ (5,6) | Y− (5,6) |

FIG. 12H    SIGNAL Y+−

| ✕ | ✕ | Y+ (3,4) | Y− (3,4) | ✕ | ✕ |

FIG. 12I    SIGNAL Y,PB+−

| Y+ (1,2) | Y− (1,2) | PB+(1,3) | PB−(1,3) | Y+ (5,6) | Y− (5,6) |

FIG. 12J    SIGNAL Y,PR+−

| ✕ | ✕ | Y+ (3,4) | Y− (3,4) | PR+(2,4) | PR−(2,4) |

F I G. 13A

85　86　87　88　85　86　87　88

| FIRST SEGMENT SIGNAL 81 | Y+ (1 , 2) | Y- (1 , 2) | PB+ (1,3) | PB- (1,3) | Y+ (9 , 10) | Y- (9 , 10) | PB+ (9,11) | PB- (9,11) |

F I G. 13B

85′　86′　87′ 88′　85′　86′　87′ 88′

| SECOND SEGMENT SIGNAL 82 | Y+ (3 , 4) | Y- (3 , 4) | PR+ (2,4) | PR- (2,4) | Y+ (11 , 12) | Y- (11 , 12) | PR+ (10,12) | PR- (10,12) |

F I G. 13C

| THIRD SEGMENT SIGNAL 83 | Y+ (5 , 6) | Y- (5 , 6) | PB+ (5,7) | PB- (5,7) | Y+ (13 , 14) | Y- (13 , 14) | PB+ (13,15) | PB- (13,15) |

F I G. 13D

| FOURTH SEGMENT SIGNAL 84 | Y+ (7 , 8) | Y- (7 , 8) | PR+ (6,8) | PR- (6,8) | Y+ (15 , 16) | Y- (15 , 16) | PR+ (14,16) | PR- (14,16) |

|←　　　　2-LINE DATA　　　　→|

EP 0 477 905 A2

## F I G. 14